# EUROPÄISCHE PATENTANMELDUNG

(11) **EP 1 666 918 A1**
(43) Veröffentlichungstag der Anmeldung: **07.06.2006**
(21) Anmeldenummer: 05022959.0
(22) Anmeldetag: 21.10.2005
(51) Int. Cl.: G01S 13/86, G08G 1/16

(54) **Verfahren zur Verarbeitung von Entfernungsdaten**

(30) Priorität: 03.12.2004 DE 102004058251
(71) Anmelder: Valeo Schalter und Sensoren GmbH, 74321 Bietigheim-Bissingen (DE)
(72) Erfinder: Fernandes, Ernani M., 74321 Bietigheim-Bissingen (DE); Wentland, Dietrich, 72172 Sulz (DE)
(74) Vertreter: Dreiss, Fuhlendorf, Steimle & Becker

(57) **Zusammenfassung**

Die vorliegende Erfindung betrifft ein Verfahren zur Verarbeitung von Entfernungsdaten (110b), bei dem ein Kamerabild (100) von einem zu untersuchenden Raumbereich erhalten wird, und bei dem Entfernungsdaten (110b) aus dem zu untersuchenden Raumbereich mittels einer Entfernungssensorik erhalten werden. Das Verfahren ist dadurch gekennzeichnet, dass die Entfernungsdaten (110b) dem Kamerabild (100) zugeordnet werden.

## Beschreibung

Die vorliegende Erfindung betrifft ein Verfahren zur Verarbeitung von Entfernungsdaten, bei dem ein Kamerabild von einem zu untersuchenden Raumbereich erhalten wird, und bei dem Entfernungsdaten aus dem zu untersuchenden Raumbereich mittels einer Entfernungssensorik erhalten werden.

Derartige Verfahren sind aus dem Stand der Technik bekannt und werden beispielsweise im Kraftfahrzeugbereich dazu eingesetzt, um ein Rückfahrkamerasystem zu realisieren. Hierbei wird dem Fahrer des Kraftfahrzeugs ein hinter dem Kraftfahrzeug befindlicher Bereich in Form des Kamerabilds präsentiert und gleichzeitig wird ein z.B. akustisches Signal ausgegeben, sobald ein vorgebbarer Abstand des Kraftfahrzeugs zu einem hinter dem Kraftfahrzeug befindlichen Hindernis unterschritten wird. Die Abstandserkennung wird hierbei beispielsweise durch eine ultraschallbasierte Abstandssensorik ermöglicht.

Nachteilig an derartigen System ist beispielsweise die Tatsache, dass zwar in Form des akustischen Signals eine Warnung bei Unterschreiten eines Abstands des Kraftfahrzeugs zu einem Hindernis abgegeben wird, dass jedoch das entsprechende, die akustische Warnung hervorrufende Hindernis, nicht in dem Kamerabild kenntlich gemacht wird.

Es ist Aufgabe der vorliegenden Erfindung, ein Verfahren der eingangs genannten Art dahingehend zu verbessern, dass eine vielfältigere und flexible Nutzung der Entfernungsdaten und des Kamerabilds möglich ist.

Diese Aufgabe wird bei dem beschriebenen Verfahren aus dem Stand der Technik dadurch gelöst, dass die Entfernungsdaten dem Kamerabild zugeordnet werden.

Die erfindungsgemäße Zuordnung der Entfernungsdaten zu dem Kamerabild ermöglicht eine einfache Auswertung der Entfernungsdaten im Zusammenhang mit dem Kamerabild.

Ganz besonders vorteilhaft ist bei einer Ausführungsform des erfindungsgemäßen Verfahrens vorgeschlagen, dass die Zuordnung der Entfernungsdaten derart erfolgt, dass jedem Bildpunkt des Kamerabilds ein Entfernungsdatenwert zugewiesen wird. Auf diese Weise kann z.B. bei einer Analyse des Kamerabilds ohne zusätzlichen Rechenaufwand ein zu einem betrachteten Bereich des Kamerabilds gehöriger Entfernungsbereich ermittelt werden.

Dementsprechend ist es bei dem Unterschreiten eines vorgebbaren Abstands des Kraftfahrzeugs zu einem Hindernis möglich, diejenigen Teile bzw. Bildpunkte des Kamerabilds optisch hervorzuheben, denen Entfernungsdaten aus dem Entfernungsbereich zugeordnet sind, in dem sich das erkannte Hindernis befindet. Auf diese Weise kann ein Fahrer des Kraftfahrzeugs sofort aus dem Kamerabild erfassen, bezüglich welcher Objekte bzw. Hindernisse eine aktuelle Kollisionswarnung erfolgt.

Insbesondere entfällt bei der Anwendung des erfindungsgemäßen Verfahrens auch eine periodische Neuberechnung der Entfernungsdaten, weil diese beispielsweise nur einmal ermittelt werden müssen und anschließend in ihrer erfindungsgemäßen Zuordnung zu dem Kamerabild abgespeichert werden.

Besonders vorteilhaft ist eine Organisation bzw. Speicherung der Entfernungsdaten in Matrixform.

Gemäß einer weiteren vorteilhaften Ausführungsform der Erfindung werden die Entfernungsdaten unter Verwendung eines zur Speicherung bzw. Verarbeitung von Kamerabildern und/oder sonstigen Bildern verwendeten Datenformats gespeichert. Hierbei ist es beispielsweise auch möglich, die Entfernungsdaten in einem Farbkanal eines Monochrom- oder Farbbildes abzuspeichern, der üblicherweise die Grauwerte bzw. Helligkeitswerte des Monochrom- oder Farbbilds enthält.

Ferner ist es bei dem erfindungsgemäßen Verfahren auch möglich, die Entfernungsdaten zusammen mit den Daten des zugehörigen Kamerabildes z.B. in einer Datei abzuspeichern, wobei beispielsweise jeweils für das Kamerabild und die Entfernungsdaten gesonderte Farbkanäle in der Datei vorgesehen sind.

Eine weitere vorteilhafte Ausführungsform des erfindungsgemäßen Verfahrens ist dadurch gekennzeichnet, dass als Entfernungssensorik eine vorzugsweise binokulare Kameraanordnung und/oder mindestens ein Ultraschallsensor und/oder mindestens ein Radarsensor oder eine Kombination der genannten Systeme verwendet wird.

Die Verwendung einer monokularen Kameraanordnung in Kombination mit einem oder mehreren Ultraschallsensoren und/oder einem oder mehreren Radarsensoren als Entfernungssensorik im Sinne der vorliegende Erfindung ist ebenfalls denkbar.

Besonders vorteilhaft ist das erfindungsgemäße Verfahren zur Verarbeitung von Entfernungsdaten verwendbar, die insbesondere einen Abstand zwischen einem Kraftfahrzeugzeug und Objekten in der Umgebung des Kraftfahrzeugs angeben.

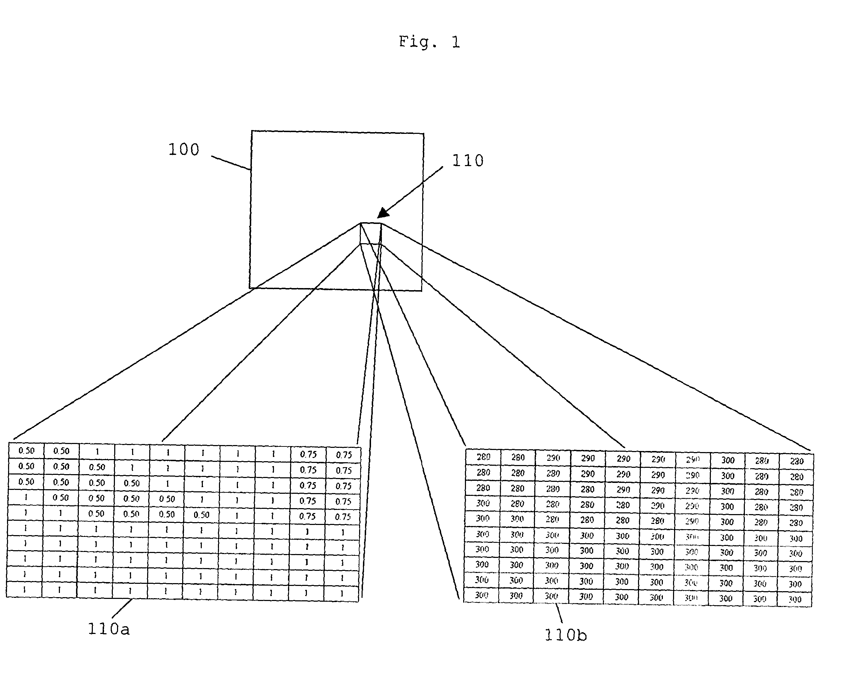

Weitere Anwendungsmöglichkeiten und Vorteile der vorliegenden Erfindung sind in der nachfolgenden Figurenbeschreibung unter Bezug auf die Zeichnung angegeben, wobei
- Figur 1: die Organisation eines Ausschnitts eines Kamerabildes mitsamt entsprechender Entfernungsdaten zeigt.

Figur 1 zeigt schematisch ein durch das Rechteck 100 symbolisiertes Kamerabild, wie es beispielsweise von einem nicht dargestellten Rückfahrkamerasystem eines Kraftfahrzeugs oder einer beliebigen sonstigen Bildquelle erhalten wird.

Das Kamerabild 100 ist durch in Matrixform organisierte Grauwerte symbolisiert, die im vorliegenden Beispiel einen Wertebereich von 0 bis 1 aufweisen. Die Tabelle 110a zeigt einen Ausschnitt 110 des Kamerabilds 100 bzw. der betreffenden Grauwerte des Kamerabildes 100 in Vergrößerung.

Neben einer Darstellung des Kamerabilds 100 durch Grauwerte ist ein farbiges Kamerabild ebenso denkbar. Hierbei existieren für jeden Farbkanal entsprechende Farbwerte. Die Grauwerte bzw. Farbwerte können je nach Definition bzw. in Abhängigkeit einer computerbasierten Implementierung generell auch unterschiedliche Wertebereiche annehmen. Es ist beispielsweise bei einer 8-bit Ganzzahldarstellung der Grau- bzw. Farbwerte auch möglich, einen Wertebereich von 0 bis 255 zu verwenden, oder z.B. bei einer 16-bit Ganzzahldarstellung einen Wertebereich von 0 bis 65535 usw.

Bei der im vorliegenden Fall beschriebenen Darstellung des Kamerabilds 100 durch Grauwerte entspricht jeder der in Tabelle 110a aufgeführten Grauwerte genau einem Bildpunkt des Kamerabilds 100.

Erfindungsgemäß sind dem Kamerabild 100 Entfernungsdaten zugeordnet, wobei jeweils ein Entfernungsdatenwert einem Bildpunkt des Kamerabilds 100 zugehört. Dieser Sachverhalt ist durch die neben der Tabelle 110a abgebildete Tabelle 110b symbolisiert.

Die Tabelle 110b enthält hierbei diejenigen Entfernungsdatenwerte, die den Bildpunkten des vergrößerten Ausschnitts 110 des Kamerabilds 100 entsprechen.

Die Entfernungsdaten werden mittels einer ebenfalls nicht gezeigten Entfernungssensorik erhalten, wie sie in Form von binokularen Kameraanordnungen und/oder einem oder mehreren Ultraschallsensoren und/oder einem oder mehreren Radarsensoren bzw. einer Kombination dieser Systeme aus dem Stand der Technik bekannt ist.

Die Verwendung einer monokularen Kameraanordnung in Kombination mit einem oder mehreren Ultraschallsensoren und/oder einem oder mehreren Radarsensoren als Entfernungssensorik ist ebenfalls denkbar.

Die bildpunktweise Zuordnung der Entfernungsdaten zu dem Kamerabild 100 erlaubt eine einfache Analyse der Entfernung von in dem Kamerabild 100 enthaltenen Objekten, die beispielsweise im Rahmen einer Hinderniserkennung oder dergleichen durchgeführt wird. Hierzu werden zunächst diejenigen Bildpunkte aus dem Kamerabild 100 ausgewählt, die zu einem Objekt gehören, dessen Entfernung abgelesen werden soll, wobei es sich beispielsweise um Bildpunkte des Ausschnitts 110 handeln kann, deren Grauwerte wie beschrieben in der Tabelle 110a dargestellt sind.

Anschließend werden die den ausgewählten Bildpunkten entsprechenden Entfernungsdatenwerte z.B. aus der Tabelle 110b abgelesen.

Durch die erfindungsgemäße Speicherung der Entfernungsdaten in ihrem dem Kamerabild 100 zugeordneten Zustand ist eine spätere Verwendung der Entfernungsdaten in der vorstehend beschriebenen Art und Weise jederzeit möglich, ohne dass z.B. eine erneute Berechnung der Entfernungsdaten erfolgen muss.

Ganz besonders vorteilhaft werden die Entfernungsdaten unter Verwendung eines zur Speicherung bzw. Verarbeitung von Kamerabildern und/oder sonstigen Bildern verwendeten Datenformats gespeichert. Auf diese Weise können die Entfernungsdaten ohne zusätzlichen Verarbeitungsaufwand wie ein herkömmliches Kamerabild 100 z.B. in einen Mikroprozessor oder in einen digitalen Signalprozessor (DSP) zur weiteren Verarbeitung eingelesen werden.

Bei der erfindungsgemäßen Speicherung der Entfernungsdaten in einem bekannten, auch für die Kamerabilder 100 verwendeten Bildatenformat, ist je nach erforderlicher Präzision bzw. dem Wertebereich und der Auflösung der Entfernungsdatenwerte ein entsprechender Datentyp zu wählen. Beispielsweise können die Grauwerte eines Kamerabilds 100 mit 8 bit je Bildpunkt kodiert werden, wobei 256 verschiedene Grauwerte darstellbar sind. Für die Speicherung von Entfernungsdaten kann prinzipiell dasselbe Bilddatenformat verwendet werden, wobei jedoch entsprechend einer höheren Auflösung der Entfernungsdatenwerte z.B. 16 bit je Entfernungsdatenwert zur Speicherung der Entfernungsdaten vorzusehen sind.

Eine derartige Verwendung unterschiedlicher Speichertiefen bzw. auch unterschiedlich vieler Farbkanäle wird durch herkömmliche Bildatenformate wie z.B. das Bitmap-Format (*.BMP) oder auch das JPG-Format (Joint Photographics Experts Group, *.JPG) oder dergleichen unterstützt.

Es ist beispielsweise möglich, unter Verwendung desselben Bilddatenformats das Kamerabild 100 mit einer ersten Speichertiefe in einer ersten Bilddatei zu speichern und die Entfernungsdaten mit einer zweiten Speichertiefe in einer zweiten Bilddatei zu speichern. Die bildpunktweise Zuordnung der Entfernungsdaten zu den Grauwerten des Kamerabilds 100 wird hierbei nicht aufgehoben. Für eine weitere Verarbeitung kann anschließend je nach Bedarf nur das Kamerabild oder nur das die Entfernungsdaten enthaltende Bild geladen werden, so dass nicht stets beide Bilder gleichzeitig geladen werden müssen, was sich vorteilhaft auf den Ressourcenverbrauch innerhalb eines die weitere Verarbeitung durchführenden Mikroprozessors oder digitalen Signalprozessors (DSP) auswirkt. Für komplexere Auswertungen sind auch beide Bilddateien nebeneinander ladbar und/oder auswertbar.

Darüberhinaus ist es möglich, die Entfernungsdaten zusammen mit dem Kamerabild 100 in derselben Bilddatei zu speichern, wobei die Grauwerte des Kamerabilds 100 z.B. in einem ersten Farbkanal der Bilddatei abgelegt werden und die Entfernungsdaten in einem zweiten Farbkanal. Hierbei ist es vorteilhaft, wenn für die Entfernungsdaten dieselbe Speichertiefe verwendet wird wie für die Grauwerte des Kamerabilds 100.

Dieselbe Vorgehensweise ist auch bei farbigen Kamerabildern 100 möglich, die bei einer Speicherung gemäß einem RGB-Farbraum oder einem YUV-Farbraum beispielsweise jeweils drei Kanäle zur Aufnahme der Bilddaten benötigen. Die Entfernungsdaten können in diesem Fall in einem vierten Farbkanal abgelegt werden.

Neben der Speicherung der Entfernungsdaten in einem separaten Farbkanal kann zur Speicherung des Kamerabilds 100 zusammen mit den Entfernungsdaten auch eine Bilddatei vorgesehen werden, die die doppelte Anzahl an Bildpunkten enthält wie das eigentliche Kamerabild 100. Bei einem monochromen Kamerabild mit 320 Spalten und 200 Zeilen kann beispielsweise eine Bilddatei mit 320 Spalten und 400 Zeilen vorgesehen sein, die in den ersten 200 Zeilen Grauwerte des Kamerabilds 100 enthält und die in den zweiten 200 Zeilen die Entfernungsdaten enthält. Auch bei dieser Erfindungsvariante kann selektiv nur ein Teil der Bilddatei, d.h. das Kamerabild 100 oder die Entfernungsdaten geladen werden, indem jeweils nur die ersten 200 Zeilen oder die letzten 200 Zeilen des in der Bilddatei gespeicherten Bildes geladen werden. Die Entfernungsdaten sind hierbei in demselben Farbkanal wie die Grauwerte des Kamerabilds 100 angeordnet, allerdings in einem anderen Bildbereich.

## Patentansprüche

1. Verfahren zur Verarbeitung von Entfernungsdaten, bei dem ein Kamerabild (100) von einem zu untersuchenden Raumbereich erhalten wird, und bei dem Entfernungsdaten (110b) aus dem zu untersuchenden Raumbereich mittels einer Entfernungssensorik erhalten werden, **dadurch gekennzeichnet, dass** die Entfernungsdaten (110b) dem Kamerabild (100) zugeordnet werden.

2. Verfahren nach Anspruch 1, **dadurch gekennzeichnet, dass** die Zuordnung der Entfernungsdaten (110b) derart erfolgt, dass jedem Bildpunkt des Kamerabilds (100) ein Entfernungsdatenwert zugewiesen wird.

3. Verfahren nach einem der vorstehenden Ansprüche, **dadurch gekennzeichnet, dass** die Entfernungsdaten (110b) in Matrixform organisiert werden.

4. Verfahren nach einem der vorstehenden Ansprüche, **dadurch gekennzeichnet, dass** die Entfernungsdaten (110b) unter Verwendung eines zur Speicherung bzw. Verarbeitung von Kamerabildern (100) und/oder sonstigen Bildern verwendeten Datenformats gespeichert werden.

5. Verfahren nach einem der vorstehenden Ansprüche, **dadurch gekennzeichnet, dass** als Entfernungssensorik eine vorzugsweise binokulare Kameraanordnung und/oder mindestens ein Ultraschallsensor und/oder mindestens ein Radarsensor verwendet wird.

6. Verfahren nach einem der vorstehenden Ansprüche, **dadurch gekennzeichnet, dass** die Entfernungsdaten (110b) zusammen mit dem Kamerabild (100) gespeichert werden.

7. Verfahren nach einem der vorstehenden Ansprüche, **dadurch gekennzeichnet, dass** das Verfahren zur Verarbeitung von Entfernungsdaten (110b) verwendet wird, die insbesondere einen Abstand zwischen einem Kraftfahrzeugzeug und Objekten in der Umgebung des Kraftfahrzeugs angeben.
